# EUROPEAN PATENT SPECIFICATION

(11) **EP 2 481 037 B1**
(45) Date of publication and mention of the grant of the patent: **07.11.2018**
(21) Application number: 09804121.3
(22) Date of filing: 24.12.2009
(51) Int. Cl.: G08G 1/123, H04M 1/725, B62D 15/02, G08G 1/00, H04M 1/60

(54) **DRIVER ASSISTANCE DEVICE AND SYSTEM FOR VEHICLE ACCIDENT DETECTION AND METHOD FOR DETECTING A VEHICLE ACCIDENT**
FAHRERHILFSVORRICHTUNG UND SYSTEM ZUR ERKENNUNG EINES FAHRZEUGUNFALLS SOWIE VERFAHREN ZUR ERKENNUNG EINES FAHRZEUGUNFALLS
DISPOSITIF D'AIDE À LA CONDUITE, SYSTÈME DE DÉTECTION D'UN ACCIDENT DE VÉHICULE ET PROCÉDÉ DE DÉTECTION D'UN ACCIDENT DE VÉHICULE

(30) Priority: 25.09.2009 DE 102009048492
(43) Date of publication of application: 01.08.2012
(73) Proprietor: Valeo Schalter und Sensoren GmbH, 74321 Bietigheim-Bissingen (DE)
(72) Inventor: REILHAC, Patrice, 73732 Esslingen (DE); MOIZARD, Julien, 75005 Paris (FR)
(86) International application number: PCT/EP2009/009273
(87) International publication number: WO 2011/035799

(56) References cited:
- WO-A1-2008/007878
- US-A1- 2005 128 062
- US-A1- 2005 208 925
- US-A1- 2006 166 644

## Description

The invention relates to a driver assistance device for vehicle accident detection, comprising a portable communication device having a control unit. The invention also relates to a system for vehicle accident detection, comprising a vehicle and a portable communication device having a control unit. Further, the present invention relates to a method for detecting a vehicle accident by means of a portable communication device having a control unit.

Driver assistance systems for detecting a vehicle accident are already known from the prior art. The document US 6,340,928 B1 describes an emergency assistance system that transmits vehicle and occupant information to an emergency station upon an accident being detected. This system includes a mobile phone having a GPS receiver (Global Positioning System). The system also includes a vehicle crash sensing system external to the mobile phone. The crash sensing system can detect an accident and transmit a crash signal to the mobile phone, once an accident is detected. The crash signal is transmitted using Bluetooth® technology. A controller of the mobile phone receives the crash signal and initializes a telephone call to the emergency station. A signal identifying the current location of the vehicle is transmitted by the mobile phone to the emergency station.

Further, the US patent application 2002/0063637 A1 discloses a similar system for detecting a vehicle accident. One sensor for sensing impact is located on the rear bumper, and one sensor for sensing impact is located on the front bumper of the automobile. Further, an image sensing device is provided inside the vehicle. If an accident occurs while driving the vehicle, either of the impact sensors is activated. Upon detecting the accident, a mobile phone calls a data recording station external to the vehicle. At the same time, all of the image data is transmitted to the data recording station. Then, the mobile phone calls a police station.

The emergency assistance systems according to the prior art require an expensive sensing system for sensing a crash condition. All those systems normally have to be mounted on vehicle parts. For one thing, this is very costly; for another, such systems - if factory-mounted - are available in motor vehicles of higher standard only. Another disadvantage found with such systems is reduced reliability: After an accident has occurred, the communication link between the mobile phone and the sensors mounted on the vehicle might be disrupted, and establishing contact with the emergency station is no longer possible.

Document WO2008/007878 describes an in-vehicle incident recording system. An object of the present invention is to provide a driver assistance device for accident detection as well as a system and a method for detecting a vehicle accident by means of a portable communication device which are reliable and usable in an ordinary vehicle.

This problem is solved - according to the invention - by means of a portable communication device with the features according to claim 1, a driver assistance device with the features according to patent claim 13, by means of a system with the features according to patent claim 14 as well as by means of a method with the features of patent claim 15. Advantageous embodiments of the invention are subject matter of the dependent claims and of the description.

According to the present invention, there is provided a driver assistance device for vehicle accident detection, comprising a portable communication device having a control unit. The portable communication device comprises at least one internal sensor for acquiring information about a state of the portable communication device and/or information about conditions external to the portable communication device. The control unit is designed for establishing a communication link between said portable communication device and an emergency station upon a predetermined emergency criterion relating to the acquired information being fulfilled.

Thus, according to the invention, the control unit of the portable communication device can detect an accident based on information captured by an internal sensor of the portable device. In particular, unlike in the prior art, no additional external sensors are required for this purpose. The invention takes advantage of the fact that certain portable communication devices that are available on the market - mobile phones or personal digital assistants, for example - already are equipped with internal sensors. The invention now approaches the problem at hand by detecting an accident in which the motor vehicle is involved on the basis of information acquired by these internal sensors. In practice, the driver assistance device according to the invention has the advantage that it can be used in any vehicle. No expensive systems are required; in particular, just the portable communication device suffices.

In one embodiment, the portable communication device can be a cellular phone or a personal digital assistant (PDA). Such devices usually comprise sensors for entertaining applications. These sensors may be used for detecting an accident of the vehicle.

For example, said information about the state of the portable communication device can include motion information, i.e. information regarding the motion state of the portable communication device. For instance, the information about the state of the portable communication device may include information about an acceleration and/or about a velocity and/or about a moving direction of the portable communication device. Additionally or alternatively, said information may include information about an actual global position of the portable communication device.

Said information about conditions external to the portable communication device can include information regarding the surroundings of the portable communication device. For instance, this information can include traffic information and/or image information about the surrounding area.

In one embodiment, the control unit of the portable device is designed for considering exclusively information captured by means of internal sensors of the portable communication device when checking whether the emergency criterion is fulfilled. In this embodiment, the portable communication device does not need any external sensors, and an accident can be detected only on the basis of information obtained by internal sensors of the portable communication device. This embodiment has the advantage that one and the same driver assistance device can be used for different vehicles, without certain parts having to be removed from one vehicle and remounted in another.

The portable communication device can comprise an acceleration sensor for measuring an acceleration of the portable communication device. Then, the control unit can be designed to consider at least one measured value of the acceleration when checking whether the emergency criterion is fulfilled or not. Thus, in this embodiment, the control unit can detect an accident on the basis of measured values obtained by the acceleration sensor; it then establishes the communication link to the emergency station, once the predetermined emergency criterion relating to the measured values of the acceleration is fulfilled. On the basis of the acceleration of the portable communication device it can be reliably determined whether an accident has happened or not. Thus, measuring the acceleration allows a reliable statement about the occurrence of an accident.

The emergency criterion can include the condition that the acceleration undergoes a predetermined change. If the acceleration undergoes a predetermined change, this might be an indication that an accident is happening or about to happen. The predetermined change or characteristic of the acceleration can, for example, include a jump or step; then, the emergency criterion includes the condition that a measured value of the acceleration is numerically very large or exceeds a limit value and that a measured value subsequently obtained is very small, in particular zero.

Additionally or alternatively, the emergency criterion includes the condition that at least one measured value of the acceleration exceeds a predetermined limit value. If a measured value of the acceleration numerically exceeds a limit value, this can be an indication that an accident is happening or about to happen. Thus, by comparing the measured values of the acceleration with a stored limit value, a reliable statement can be made as to whether an accident has happened or not. The predetermined limit value can be a value from a range of values from 2 g to 5 g.

Preferentially, the acceleration sensor is a three-dimensional acceleration sensor. This means that with the acceleration sensor the acceleration of the portable communication device can be measured in all three directions of a Cartesian coordinate system. As a result, the distribution of the acceleration forces in the coordinate system is known. Thus, the control unit of the portable communication device cannot only determine the acceleration of the vehicle in a forward direction or a deceleration of the vehicle, but can also determine a transverse acceleration and/or an acceleration in a vertical direction.

In one embodiment, the control unit is designed to ignore the vertical acceleration of the portable communication device while checking whether the emergency criterion is fulfilled or not. This means that the control unit can only take into account the acceleration of the portable communication device in a horizontal direction - with an accuracy of ± 45°, in one embodiment. Thus, it is possible to prevent an emergency call if the portable communication device has dropped to the ground.

In one embodiment, the portable communication device comprises a compass for measuring an orientation of said portable communication device relative to a predetermined direction. The control unit can be designed for analyzing measured values of the orientation when checking whether the emergency criterion is fulfilled. In particular, this embodiment provides a validation of the predetermined emergency criterion. For example, such a validation can be carried out like this: First, the emergency criterion is checked on the basis of the acceleration. Then, it is validated with the aid of the measured values of the compass. An analysis of the measured values of the compass allows an even more precise statement as to whether an accident has happened or not. In this embodiment, the emergency criterion can include the condition that the measured orientation undergoes a predetermined change in a predetermined period of time.

In one embodiment, the portable communication device comprises a receiver for receiving traffic data as information about conditions external to the portable device. The control unit can be designed for analyzing the traffic data when checking whether the emergency criterion is fulfilled. Again, this can be a validation of the predetermined emergency criterion: The emergency criterion can be checked on the basis of the measured values of the acceleration sensor and then be validated with the aid of the traffic data. This allows an even more precise statement as to the occurrence of an accident.

In one embodiment, the emergency criterion is not fulfilled when a traffic jam is determined from the traffic data. This embodiment has the advantage that an emergency call will not be initialized automatically if the vehicle is stuck in a traffic jam and an accident that has happened, as the case may be, was witnessed by several persons.

The portable communication device can comprise a navigation receiver, namely, for instance, a GPS sensor (global positioning system) and/or a GALILEO sensor. The navigation receiver can receive position data. The control unit can be designed for analyzing the position data when checking whether the emergency criterion is fulfilled. For instance, the control unit can check whether the vehicle is being driven on a public road. The emergency criterion can include the condition that a public road is determined from the position data, i.e. that the vehicle is being driven on a public road. This has the advantage that no emergency call will be initialized if the vehicle is in the open country.

In one embodiment, the emergency criterion includes the condition that the portable communication device is located in or on the vehicle. In case the vehicle is a motor vehicle, the emergency criterion can include the condition that the portable communication device is located inside the motor vehicle. In the case of a motorbike, the emergency criterion can include the condition that the portable communication device is located on the motorbike. There are some ways of determining whether the portable communication device is located in or on the vehicle: This can be checked using a holding device for holding the portable communication device: The emergency criterion can include the condition that the portable communication device is linked to the holding device. Additionally or alternatively, the portable communication device can be designed for detecting whether an engine of the vehicle is running or not. For this purpose, the portable communication device can use the acceleration sensor and/or a vibration sensor. Additionally or alternatively, the portable communication device can include an RFID reader (radio frequency identification) for identifying whether the portable communication device is located in or on the vehicle. Thus, it is possible to prevent an emergency call if the portable communication device is in a public service vehicle, for example a train or a plane.

In an embodiment, a transfer of data is effected between the vehicle - namely a control device of the vehicle, for example - and the portable communication device. This communication may be effected according to the WLAN and/or Bluetooth® standard and/or through an electrical connection which can be established by means of a holding device of the portable communication device. A chassis number of the vehicle may be transmitted from the vehicle to the portable communication device. This means that the portable communication device may be designed for receiving such chassis number of the vehicle. In this case, the following options are provided: The emergency criterion may include the condition that the received chassis number corresponds to a number saved in the portable communication device. Then, the communication link between the portable communication device and the emergency station can be established only if the received chassis number matches the stored number, i.e. if the vehicle is "own vehicle". Alternatively, the emergency criterion may also be independent of the chassis number. Additionally or alternatively, the received chassis number of the vehicle may also be sent to the emergency station, namely by the portable communication device. In this case the emergency station is informed which vehicle is the vehicle involved in an accident. The emergency station thus can also possibly draw conclusions as to the driver and the kind of vehicle concerned.

In one embodiment, the communication link between the portable communication device and the emergency station can be established only if the portable communication device does not move during a predetermined period of time. This means, once the emergency criterion is fulfilled, the control unit can establish the communication link between the portable communication device and the emergency station only when the portable communication device remains at standstill for a first predetermined period of time. Such information can e.g. be obtained from measured data provided by the acceleration sensor and/or data provided by a navigation system. In one embodiment, the communication link can be established if the portable communication device remains at standstill for the predetermined period of time upon the acceleration having undergone the predetermined change. This first predetermined period of time can be a value from a range of values from 20 seconds to 100 seconds, in particular from a range of values from 40 seconds to 80 seconds; the first predetermined period of time can be a value of 1 minute, for instance. If the portable communication device does not move for the predetermined period of time after fulfilment of the emergency criterion, this is an indication that an accident has happened and that the driver may need help. Thus, it is possible to define a precise emergency criterion; the communication link is not established unless it is actually needed. That way it is possible to prevent situations in which an emergency call is initialized when the acceleration forces due to a sporty driving style are relatively high, but the vehicle continues to be in motion. Consequently, in this embodiment, misunderstandings about initializing an emergency call can be prevented.

In one embodiment, the communication link between the portable communication device and the emergency station can be established only if the driver does not invalidate the establishment of the communication link during a second predetermined period of time after the crash:
Once said emergency criterion is fulfilled, the control unit can be designed for establishing the communication link between the portable communication device and the emergency station only after the second predetermined period of time has passed. In this way the driver even before initializing this emergency call is given the possibility of stopping the initialization of this emergency call or the possibility of calling an emergency station himself. This quasi provides a function of user guidance; the driver can e.g. be informed by the portable communication device about the possibility of stopping the emergency call. In particular in the case of minor accidents this proves to be particularly advantageous. If the communication with the emergency station is not necessary, the driver namely can avoid the initialization of an emergency call.

In this embodiment, the control unit can be designed for receiving a desist input effected by an operator - the driver, for example - on an operating unit of the portable communication device, i.e. on an input unit. The control unit can be designed for desisting from establishing the communication link between the portable communication device and the emergency station, once said desist input has been received within the second predetermined period of time.

The second period of time can be equal or unequal to the first predetermined period of time. For instance, the second predetermined period of time can be a value from a range of values from 20 seconds to 100 seconds, in particular a value from a range of values from 40 seconds to 80 seconds, for example a value of 1 minute.

In summary, it can be said that through the solution employing the previously mentioned sensors it is possible to create an automatic emergency call. The main advantage is to achieve an emergency call function by using a standard smart phone. One does not need to integrate several expensive sensors to determine the crash like they are used in the prior art.

According to the present invention, there is also provided a system for vehicle accident detection, comprising a vehicle - a motor vehicle or a motorbike, for instance - and a portable communication device having a control unit. The portable communication device comprises at least one internal sensor for acquiring information about a state of the portable communication device and/or information about conditions external to the said portable communication device. The control unit establishes a communication link between the portable communication device and an emergency station upon a predetermined emergency criterion relating to the acquired information being fulfilled.

Provided is also a method for detecting a vehicle accident by means of a portable communication device having a control unit. An internal sensor of the portable communication device acquires information about a state of the portable communication device and/or information about conditions external to the portable communication device. The control unit checks whether a predetermined emergency criterion relating to the acquired information is fulfilled. The control unit establishes a communication link between the portable communication device and an emergency station upon the predetermined emergency criterion being fulfilled.

According to the present invention, there is provided a computer-readable storage medium storing a computer program that causes a computer to execute the method according to the present invention.

The preferred embodiments presented with regard to the driver assistance device according to the invention and their advantages apply - mutatis mutandis - to the system according to the invention, the method according to the invention and the computer program according to the invention.

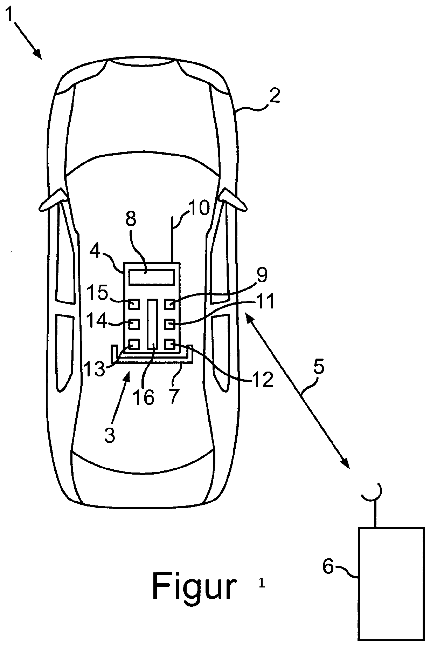

Further features of the invention may be gathered from the claims, the figure and the description of the figure. The features and feature combinations previously mentioned in the description as well as the features and feature combinations mentioned further along in the description of the figure and/or shown in the figure alone are usable not only in the respectively indicated combination, but also in other combinations and alone without departing from the scope of the invention.

Below, embodiments of the invention are explained in more detail based on a schematic drawing. The drawing shows a schematic representation of a motor vehicle comprising a driver assistance device according to one embodiment of the present invention.

Provided is a system 1 for detecting a vehicle accident. The system 1 comprises a motor vehicle 2. The vehicle 2 is a passenger vehicle in the present embodiment. Further, the system 1 comprises a driver assistance device 3 having a cellular phone 4. The cellular phone 4 is a portable communication device according to the present invention. The phone 4 is designed for detecting an accident in which the vehicle 2 is involved. Once an accident is detected, the phone 4 establishes a communication link 5 to an emergency station 6. In particular, the phone 4 calls the emergency station 6 upon detecting an accident. The communication link 5 may be a unidirectional communication link or a bidirectional communication link. In the case of an accident, the phone 4 can send data relating to the current position of the vehicle 2 as well as data relating to the fact that the accident has occurred. The emergency station 6 may be a police station, an emergency medical station or a fire department.

The driver assistance device 3 further comprises a holding device 7. The holding device 7 is designed for holding the mobile phone 4. An electrical connection may be established between the mobile phone 4 and the holding device 7, once the phone 4 is located on the holding device 7.

The cellular phone 4 comprises a display 8, a communication port 9 connected to an antenna 10 for sending and receiving electromagnetic waves, a control unit 11, an acceleration sensor 12 for measuring an acceleration of the phone 4, a compass 13 for measuring an orientation of the phone 4 relative to a predetermined direction, a navigation receiver 14 for receiving a position data relating to the actual global position of the phone 4, a receiver 15 for receiving traffic data as well as an operating unit 16, i.e. an input device.

The acceleration sensor 12 is a three-dimensional acceleration sensor and measures the acceleration of the mobile phone 4 in three directions. The compass 13 measures the orientation of the mobile phone 4 relative to a north direction, for instance. The navigation receiver 14 can be a GPS receiver for receiving GPS data. The receiver 15 receives data about the actual traffic conditions in the surrounding area of the vehicle 2. All the components 12, 13, 14, 15 are sensors according to the present invention. Furthermore, the acceleration, the orientation and the global position each represent a state of the mobile phone 4. As opposed to this, the traffic data represent information external to the mobile phone 4. All the components 12, 13, 14, 15 send data to the control unit 11: The acceleration sensor 12 sends data comprising measured values of the acceleration; the compass 13 sends data comprising measured values of the orientation; the navigation receiver 14 sends data comprising information about the current global position of the mobile phone 4; and the receiver 15 sends data comprising information about the current traffic conditions. The control unit 11 can analyze all this data while checking whether an accident has occurred or not.

In particular, an emergency criterion is predetermined and stored in the control unit 11. While checking whether an accident has occurred or not, the control unit 11 checks whether the predetermined emergency criterion is fulfilled or not. The control unit 11 calls the emergency station 6 upon the emergency criterion being fulfilled.

In particular, the emergency criterion can include one or more of the following conditions:
a) The mobile phone 4 is located inside the vehicle 2; the control unit 11 can check whether the electrical connection between the phone 4 and the holding device 7 is established or not;
b) The acceleration undergoes a predetermined change;
c) At least one measured value of the acceleration exceeds a predetermined limit value;
d) The orientation undergoes a predetermined change;
e) The vehicle 2 is being driven on a public road;
f) The vehicle 2 is not stuck in a traffic jam.

Concerning condition a), the control unit 11 can check whether the mobile phone 4 is located on the holding device 7. On the basis of the measured values of the acceleration and/or on the basis of measured values of a vibration sensor (not shown), the control unit 11 can check whether the engine of the vehicle 2 is running or not. In case the engine is running, the control unit 11 determines that the mobile phone 4 is located inside the vehicle 2.

With reference to condition b), the predetermined change may include a fast increase in the magnitude of the acceleration and subsequently a fast decrease of the magnitude of the acceleration, namely to the value of zero. This means, the predetermined change may include a step or a jump in the magnitude of the acceleration.

According to condition c), the predetermined limit value can be a value from a range of values from 2 g to 5 g.

Regarding condition d), the emergency criterion can include that the orientation of the mobile phone 4 changes continuously for a predetermined time interval with a predetermined velocity. This time interval may be a value from a range of values from 100 milliseconds to 3 seconds, for example.

According to condition e), the control unit 11 can check whether the vehicle 2 is located on a public road or not. This can be checked analyzing the global position data received by the navigation receiver 14.

As to condition f): A traffic jam can be detected by the control unit 11 on the basis of the traffic data received by the receiver 15. In this embodiment, the emergency criterion can include the condition that the vehicle 2 did not remain in the traffic jam for a predetermined time interval. This time interval may be a value from a range of values from 1 minute to 5 minutes. Thus, it is ensured that the emergency call is only made if the vehicle 2 is at the end of the traffic jam. This is based on the fact that serious accidents are unlikely to happen in the middle of a traffic jam so that there is no need for automatic emergency calls.

Once the emergency criterion is fulfilled, the control unit 11 can establish the communication link 5 only after the mobile phone 4 remains at standstill for a first predetermined period of time, for example for one minute. Further, once the emergency criterion is fulfilled, the control unit 11 can wait for a second predetermined period of time to let the driver cancel the communication link 5 to the emergency station 6. This second period of time can amount to one minute as well and can run parallel to the first period of time. The first period of time and the second one can be the same period of time. In this embodiment, the driver or any operator of the phone 4 can effect a desist input on the operating unit 16. This input causes the control unit 11 to desist from establishing the communication link 5 to the emergency station 6. Unless the operator effects the desist input within the second predetermined period of time, the control unit 11 establishes the communication link 5.

To sum up, the control unit 11 uses information acquired only by internal sensors 12, 13, 14, 15 of the mobile phone 4. On the basis of this information, the control unit 11 can check whether an accident has occurred or not. In the case of an accident, the control unit 11 establishes the communication link 5 to the emergency station 6 by means of cellular communication.

## Claims

1. A portable communication device (4) having a control unit (11),
**characterized in that**
said portable communication device (4) comprises at least one internal sensor (12, 13, 14, 15) for acquiring information about a state of said portable communication device (4) and/or information about conditions external to said portable communication (4) device including image information about the surrounding area, wherein the control unit (11) is designed for establishing a communication link (5) between said portable communication device (4) and an emergency station (6) upon a predetermined emergency criterion relating to the acquired information being fulfilled and once said emergency criterion is fulfilled, the control unit (11) is designed for establishing the communication link (5) between said portable communication device (4) and the emergency station (6) only when said portable communication device (4) remains at standstill for a first predetermined period of time.

2. A portable communication device (4) according to claim 1,
**characterized in that**
the control unit (11) is designed for considering exclusively information captured by means of internal sensors (12, 13, 14, 15) of said portable communication device (4) when checking whether said emergency criterion is fulfilled.

3. A portable communication device (4) according to claim 1 or 2,
**characterized in that**
said portable communication device (4) comprises an acceleration sensor (12) for measuring an acceleration of said portable communication device (4) as information about the state of said portable device (4), wherein the control unit (11) is designed to consider at least one measured value of the acceleration when checking whether said emergency criterion is fulfilled.

4. A portable communication device (4) according to claim 3,
**characterized in that**
the emergency criterion includes the condition that the acceleration undergoes a predetermined change.

5. A portable communication device (4) according to claim 3 or 4,
**characterized in that**
the emergency criterion includes the condition that at least one measured value of the acceleration exceeds a predetermined limit value.

6. A portable communication device (4) according to one of the preceding claims,
**characterized in that**
said portable communication device (4) comprises a compass (13) for measuring an orientation of said portable communication device (4) relative to a predetermined direction as information about the state of said portable device, wherein the control unit (11) is designed for analyzing measured values of the orientation when checking whether said emergency criterion is fulfilled.

7. A portable communication device (4) according to one of the preceding claims,
**characterized in that**
said portable communication device (4) comprises a receiver (15) for receiving traffic data as information about conditions external to said portable device, wherein the control unit (11) is designed for analyzing said traffic data when checking whether said emergency criterion is fulfilled.

8. A portable communication device (4) according to one of the preceding claims,
**characterized in that**
the control unit (11) is designed for determining whether said portable communication device (4) is located inside a vehicle (2) or on a vehicle, wherein the emergency criterion includes the condition that said portable communication device (4) is located inside the vehicle (2) or on the vehicle.

9. A portable communication device (4) according to one of the preceding claims,
**characterized in that**
said portable communication device (4) comprises a navigation receiver (14) for receiving position data, wherein the control unit (11) is designed for analyzing said position data when checking whether the emergency criterion is fulfilled.

10. A portable communication device (4) according to claim 9,
**characterized in that**
the emergency criterion includes the condition that a public road is determined from the position data.

11. A portable communication device (4) according to one of the preceding claims,
**characterized in that**
once said emergency criterion is fulfilled, the control unit (11) is designed for establishing the communication link (5) between said portable communication device (4) and the emergency station (6) only after a second predetermined period of time has passed.

12. A portable communication device (4) according to claim 11,
**characterized in that**
said control unit (11) is designed for receiving a desist input effected by an operator on an operating unit (16) of said portable communication device (4) and for desisting from establishing the communication link (5) between said portable communication device (4) and the emergency station (6), once said desist input has been received within the second predetermined period of time.

13. A driver assistance device (3) for vehicle accident detection, comprising a portable communication device (4) according to any one of the preceding claims.

14. A system (1) for vehicle accident detection, comprising a vehicle (2) and a portable communication device (4) according to any one of the preceding claims.

15. A method for detecting a vehicle accident, comprising the following steps:
- acquiring information about a state of said portable communication device (4) and/or information about conditions external to said portable communication device (4) by an internal sensor (12, 13, 14, 15) of said portable communication device (4) including image information about the surrounding area,
- checking whether a predetermined emergency criterion relating to the acquired information is fulfilled, and
- establishing a communication link (5) between said portable communication device (4) and an emergency station (6) by the control unit (11) upon said predetermined emergency criterion being fulfilled and only when said portable communication device (4) remains at standstill for a first predetermined period of time.

## Patentansprüche

1. Transportable Kommunikationsvorrichtung (4) mit einer Steuereinheit (11),
**dadurch gekennzeichnet, dass**
die transportable Kommunikationsvorrichtung (4) mindestens einen internen Sensor (12, 13, 14, 15) zum Erwerben von Informationen über einen Status der transportablen Kommunikationsvorrichtung (4) und/oder Informationen zu Bedingungen außerhalb der transportablen Kommunikationsvorrichtung (4) umfasst, darunter auch Bildinformationen über den umgebenden Bereich, wobei die Steuereinheit (11) dazu ausgelegt ist, eine Kommunikationsverbindung (5) zwischen der transportablen Kommunikationsvorrichtung (4) und einer Notfallstation (6) aufzubauen, wenn ein vorbestimmtes Notfallkriterium im Zusammenhang mit den erworbenen Informationen erfüllt ist, und sobald das Notfallkriterium erfüllt ist, ist die Steuereinheit (11) dazu ausgelegt, die Kommunikationsverbindung (5) zwischen der transportablen Kommunikationsvorrichtung (4) und der Notfallstation (6) nur aufzubauen, wenn die transportable Kommunikationsvorrichtung (4) für einen ersten vorbestimmten Zeitraum im Stillstand bleibt.

2. Transportable Kommunikationsvorrichtung (4) nach Anspruch 1,
**dadurch gekennzeichnet, dass**
die Steuereinheit (11) dazu ausgelegt ist, ausschließlich Informationen zu berücksichtigen, die mittels interner Sensoren (12, 13, 14, 15) der transportablen Kommunikationsvorrichtung (4) erfasst wurden, wenn geprüft wird, ob das Notfallkriterium erfüllt ist.

3. Transportable Kommunikationsvorrichtung (4) nach Anspruch 1 oder 2,
**dadurch gekennzeichnet, dass**
die transportable Kommunikationsvorrichtung (4) einen Beschleunigungssensor (12) zum Messen einer Beschleunigung der transportablen Kommunikationsvorrichtung (4) als Information über den Status der transportablen Vorrichtung (4) umfasst, wobei die Steuereinheit (11) dazu ausgelegt ist, mindestens einen gemessenen Wert der Beschleunigung zu berücksichtigen, wenn sie prüft, ob das Notfallkriterium erfüllt ist.

4. Transportable Kommunikationsvorrichtung (4) nach Anspruch 3,
**dadurch gekennzeichnet, dass**
das Notfallkriterium die Bedingung beinhaltet, dass die Beschleunigung eine vorbestimmte Änderung erfährt.

5. Transportable Kommunikationsvorrichtung (4) nach Anspruch 3 oder 4,
**dadurch gekennzeichnet, dass**
das Notfallkriterium die Bedingung beinhaltet, dass mindestens ein gemessener Wert der Beschleunigung einen vorbestimmten Grenzwert überschreitet.

6. Transportable Kommunikationsvorrichtung (4) nach einem der vorstehenden Ansprüche,
**dadurch gekennzeichnet, dass**
die transportable Kommunikationsvorrichtung (4) einen Kompass (13) zum Messen einer Ausrichtung der transportablen Kommunikationsvorrichtung (4) relativ zu einer vorbestimmten Richtung als Information über den Status der transportablen Vorrichtung umfasst, wobei die Steuereinheit (11) dazu ausgelegt ist, gemessene Werte der Ausrichtung zu analysieren, wenn sie prüft, ob das Notfallkriterium erfüllt ist.

7. Transportable Kommunikationsvorrichtung (4) nach einem der vorstehenden Ansprüche,
**dadurch gekennzeichnet, dass**
die transportable Kommunikationsvorrichtung (4) einen Empfänger (15) zum Empfangen von Verkehrsdaten als Informationen über Bedingungen außerhalb der transportablen Vorrichtung umfasst, wobei die Steuereinheit (11) dazu ausgelegt ist, die Verkehrsdaten zu analysieren, wenn sie prüft, ob das Notfallkriterium erfüllt ist.

8. Transportable Kommunikationsvorrichtung (4) nach einem der vorstehenden Ansprüche,
**dadurch gekennzeichnet, dass**
die Steuereinheit (11) dazu ausgelegt ist, zu bestimmen, ob die transportable Kommunikationsvorrichtung (4) sich innerhalb eines Fahrzeugs (2) oder an einem Fahrzeug befindet, wobei das Notfallkriterium die Bedingung beinhaltet, dass sich die transportable Kommunikationsvorrichtung (4) in dem Fahrzeug (2) oder an dem Fahrzeug befindet.

9. Transportable Kommunikationsvorrichtung (4) nach einem der vorstehenden Ansprüche,
**dadurch gekennzeichnet, dass** die transportable Kommunikationsvorrichtung (4) einen Navigationsempfänger (14) zum Empfangen von Positionsdaten umfasst, während die Steuereinheit (11) dazu ausgelegt ist, die Positionsdaten zu analysieren, wenn sie prüft, ob das Notfallkriterium erfüllt ist.

10. Transportable Kommunikationsvorrichtung (4) nach Anspruch 9,
**dadurch gekennzeichnet, dass**
das Notfallkriterium die Bedingung beinhaltet, dass von den Positionsdaten eine öffentliche Straße bestimmt wird.

11. Transportable Kommunikationsvorrichtung (4) nach einem der vorstehenden Ansprüche,
**dadurch gekennzeichnet, dass**
nach dem Erfüllen des Notfallkriteriums die Steuereinheit (11) dazu ausgelegt ist, die Kommunikationsverbindung (5) zwischen der transportablen Kommunikationsvorrichtung (4) und der Notfallstation (6) erst nach dem Verstreichen eines zweiten vorbestimmten Zeitraums aufzubauen.

12. Transportable Kommunikationsvorrichtung (4) nach Anspruch 11,
**dadurch gekennzeichnet, dass**
die Steuereinheit (11) dazu ausgelegt ist, eine von einem Bediener an einer Bedieneinheit (16) der transportablen Kommunikationsvorrichtung erwirkte Unterlassungseingabe zu empfangen und das Aufbauen der Kommunikationsverbindung (5) zwischen der transportablen Kommunikationsvorrichtung (4) und der Notfallstation (6) zu unterlassen, sobald innerhalb des zweiten vorbestimmten Zeitraums die Unterlassungseingabe empfangen wurde.

13. Fahrerhilfsvorrichtung (3) zur Erkennung eines Fahrzeugunfalls, die eine transportable Kommunikationsvorrichtung (4) nach einem der vorstehenden Ansprüche umfasst.

14. System (1) zur Erkennung eines Fahrzeugunfalls, das ein Fahrzeug (2) und eine transportable Kommunikationsvorrichtung (4) nach einem der vorstehenden Ansprüche umfasst.

15. Verfahren zum Erkennen eines Fahrzeugunfalls, das die folgenden Schritte umfasst:
- Erwerben von Informationen zu einem Status der transportablen Kommunikationsvorrichtung (4) und/oder Informationen zu Bedingungen außerhalb der transportablen Kommunikationsvorrichtung (4) durch einen internen Sensor (12, 13, 14, 15) der transportablen Kommunikationsvorrichtung (4), einschließlich Bildinformationen zu dem umgebenden Bereich,
- Prüfen, ob ein vorbestimmtes Notfallkriterium in Bezug auf die erworbenen Informationen erfüllt ist, und
- Aufbauen einer Kommunikationsverbindung (5) zwischen der transportablen Kommunikationsvorrichtung (4) und einer Notfallstation (6) durch die Steuereinheit (11), nachdem das vorbestimmte Notfallkriterium erfüllt ist, und nur dann, wenn die transportable Kommunikationsvorrichtung (4) für einen ersten vorbestimmten Zeitraum im Stillstand bleibt.

## Revendications

1. Dispositif de communication portable (4) comportant une unité de commande (11),
**caractérisé en ce que**
ledit dispositif de communication portable (4) comprend au moins un capteur interne (12, 13, 14, 15) pour acquérir des informations concernant un état dudit dispositif de communication portable (4) et/ou des informations sur des conditions externes audit dispositif de communication portable (4), comprenant des informations sur l'image de la zone environnante, dans lequel l'unité de commande (11) est conçue pour établir une liaison de communication (5) entre ledit dispositif de communication portable (4) et un poste de secours (6) selon un critère d'urgence prédéterminé relatif à la vérification des informations acquises et une fois ledit critère d'urgence satisfait, l'unité de commande (11) est conçue pour établir la liaison de communication (5) entre ledit dispositif de communication portable (4) et le poste de secours (6) uniquement lorsque ledit dispositif de communication portable (4) reste à l'arrêt pendant une première période de temps prédéterminée.

2. Dispositif de communication portable (4) selon la revendication 1,
**caractérisé en ce que**
l'unité de commande (11) est conçue pour prendre en considération exclusivement des informations capturées au moyen de capteurs internes (12, 13, 14, 15) dudit dispositif de communication portable (4) lors de la vérification du respect dudit critère d'urgence.

3. Dispositif de communication portable (4) selon la revendication 1 ou 2,
**caractérisé en ce que**
ledit dispositif de communication portable (4) comprend un capteur d'accélération (12) pour mesurer une accélération dudit dispositif de communication portable (4) comme information sur l'état dudit dispositif portable (4), dans lequel l'unité de commande (11) est conçue pour prendre en considération au moins une valeur mesurée de l'accélération lors de la vérification du respect dudit critère d'urgence.

4. Dispositif de communication portable (4) selon la revendication 3,
**caractérisé en ce que**
le critère d'urgence comprend la condition que l'accélération subisse une variation prédéterminée.

5. Dispositif de communication portable (4) selon la revendication 3 ou 4,
**caractérisé en ce que**
le critère d'urgence comprend la condition qu'au moins une valeur mesurée de l'accélération dépasse une valeur limite prédéterminée.

6. Dispositif de communication portable (4) selon l'une quelconque des revendications précédentes,
**caractérisé en ce que**
ledit dispositif de communication portable (4) comprend une boussole (13) pour mesurer une orientation dudit dispositif de communication portable (4) par rapport à une direction prédéterminée comme information sur l'état dudit dispositif portable, dans lequel l'unité de commande (11) est conçue pour analyser les valeurs mesurées de l'orientation lors de la vérification du respect dudit critère d'urgence.

7. Dispositif de communication portable (4) selon l'une quelconque des revendications précédentes,
**caractérisé en ce que**
ledit dispositif de communication portable (4) comprend un récepteur (15) pour recevoir des données de trafic parmi les informations sur les conditions externes audit dispositif portable, l'unité de commande (11) étant conçue pour analyser lesdites données de trafic en vérifiant si ledit critère d'urgence est rempli.

8. Dispositif de communication portable (4) selon l'une quelconque des revendications précédentes,
**caractérisé en ce que**
l'unité de commande (11) est conçue pour déterminer si ledit dispositif de communication portable (4) est situé à l'intérieur d'un véhicule (2) ou sur un véhicule, dans lequel le critère d'urgence comprend la condition selon laquelle ledit dispositif de communication portable (4) est situé à l'intérieur du véhicule (2) ou sur le véhicule.

9. Dispositif de communication portable (4) selon l'une quelconque des revendications précédentes,
**caractérisé en ce que**
ledit dispositif de communication portable (4) comprend un récepteur de navigation (14) pour recevoir des données de position, dans lequel l'unité de commande (11) est conçue pour analyser lesdites données de position lors de la vérification du respect dudit critère d'urgence.

10. Dispositif de communication portable (4) selon la revendication 9,
**caractérisé en ce que**
le critère d'urgence comprend la condition selon laquelle une route publique est déterminée à partir des données de position.

11. Dispositif de communication portable (4) selon l'une quelconque des revendications précédentes,
**caractérisé en ce que**
une fois que ledit critère d'urgence est rempli, l'unité de commande (11) est conçue pour établir la liaison de communication (5) entre ledit dispositif de communication portable (4) et le poste de secours (6) uniquement après une seconde période de temps prédéterminée.

12. Dispositif de communication portable (4) selon la revendication 11,
**caractérisé en ce que**
ladite unité de commande (11) est conçue pour recevoir en entrée une information de renonciation de la part d'un opérateur sur une unité d'exploitation (16) dudit dispositif de communication portable (4) et pour ne plus établir la liaison de communication (5) entre ledit dispositif de communication portable (4) et le poste de secours (6), une fois que ladite information de renonciation a été reçue au cours de la seconde période de temps prédéterminée.

13. Dispositif d'assistance au conducteur (3) pour la détection d'un accident du véhicule, comprenant un dispositif de communication portable (4) selon l'une quelconque des revendications précédentes.

14. Système (1) pour la détection d'un accident du véhicule, comprenant un véhicule (2) et un dispositif de communication portable (4) selon l'une quelconque des revendications précédentes.

15. Procédé pour détecter un accident du véhicule, comprenant les étapes consistant à :
acquérir des informations sur un état dudit dispositif de communication portable (4) et/ou des informations sur des conditions externes audit dispositif de communication portable (4) par un capteur interne (12, 13, 14, 15) dudit dispositif de communication portable (4) comprenant des informations d'image de la zone environnante,
vérifier si un critère d'urgence prédéterminé relatif aux informations acquises est rempli et
établir une liaison de communication (5) entre ledit dispositif de communication portable (4) et un poste de secours (6) par l'unité de commande (11) lorsque ledit critère d'urgence prédéterminé est rempli et uniquement lorsque ledit dispositif de communication portable (4) reste à l'arrêt pendant une première période de temps prédéterminée.
